(19) Europäisches Patentamt
European Patent Office
Office européen des brevets

(11) **EP 4 114 194 B1**

(12) **EUROPEAN PATENT SPECIFICATION**

(45) Date of publication and mention
of the grant of the patent:
**14.08.2024  Bulletin 2024/33**

(21) Application number: **21708662.8**

(22) Date of filing: **03.03.2021**

(51) International Patent Classification (IPC):
*A23K 10/20* (2016.01)        *A23K 20/105* (2016.01)
*A23K 20/158* (2016.01)      *A23K 40/25* (2016.01)
*A23K 40/30* (2016.01)        *A23K 50/40* (2016.01)
*A23K 50/42* (2016.01)        *A23L 3/3508* (2006.01)

(52) Cooperative Patent Classification (CPC):
(C-Sets available)
**A23K 20/105; A23K 10/20; A23K 20/158;
A23K 40/25; A23K 40/30; A23K 50/40;
A23K 50/42; A23L 3/3508;** A23V 2002/00;
Y02A 40/90                                    (Cont.)

(86) International application number:
**PCT/EP2021/055350**

(87) International publication number:
**WO 2021/175927 (10.09.2021 Gazette 2021/36)**

(54) **METHOD FOR PROVIDING AN ANTIMICROBIAL ACTIVITY TO A PET FOOD PRODUCT**

VERFAHREN, UM EINEM HAUSTIERFUTTERPRODUKT EINE ANTIMIKROBIELLE AKTIVITÄT ZU VERLEIHEN

PROCÉDÉ POUR DONNER UNE ACTIVITÉ ANTIMICROBIENNE À UN PRODUIT ALIMENTAIRE POUR ANIMAUX DE COMPAGNIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.03.2020  EP 20305234**

(43) Date of publication of application:
**11.01.2023  Bulletin 2023/02**

(73) Proprietor: **Spécialités Pet Food
56250 Elven (FR)**

(72) Inventors:
• **MICHEL-SALAUN, Françoise
  56250 ELVEN (FR)**
• **KERGOURLAY, Gilles
  44880 SAUTRON (FR)**

(74) Representative: **Regimbeau
  20, rue de Chazelles
  75847 Paris Cedex 17 (FR)**

(56) References cited:
**WO-A1-2012/018913      WO-A2-2004/019683
AU-B2- 738 099              FR-A1- 2 874 324
US-A1- 2002 086 090**

• **VANDERWAL P: "SALMONELLA CONTROL OF
FEEDSTUFFS OF PELLETING OR ACID
TREATMENT", WORLD'S POULTRY SCIENCE
JOURNAL, CAMBRIDGE UNIVERSITY PRESS,
GB, vol. 35, 1 January 1979 (1979-01-01), pages
70 - 78, XP001098514, ISSN: 0043-9339, DOI:
10.1079/WPS19790006**
• **"Acidifiers in Animal Nutrition", 1 January 2007,
ISBN: 978-1-904761-40-2, article STONEROCK
RALPH ET AL: "Possibilities of Salmonella
control with aid of acidifiers", pages: 21 - 29,
XP055376665**

Remarks:
The file contains technical information submitted after the application was filed and not included in this specification

(52) Cooperative Patent Classification (CPC): (Cont.)

C-Sets
A23V 2002/00, A23V 2200/10

**Description**

The present invention relates to a method for providing an antimicrobial activity against Salmonella, yeasts and/or molds to a pet food product.

BACKGROUND OF THE INVENTION

Pet food products are subject to microbial, particularly bacterial, contamination by microorganisms such as *Salmonella, Listeria, Escherichia coli,* and *Clostridium.* Although the pet food industry has an aggressive approach to quality and safety by use of long cooking times and high temperatures, cross-contamination with undesired, especially pathogenic or spoilage microorganisms may still occur, for example during post-processing.

Fats and oils are a major constituent of pet foods by contributing to their texture, odor and/or flavor, nutritional value, and palatability. Most of the time, a high proportion of fat is applied onto the kibble after the cooking-extrusion step. As a result, the application of *Salmonella*contaminated fat may lead to pet or human illness, even if good manufacturing practices are followed by pet food manufacturers.

Finding effective antimicrobial agents for this purpose has proven to be a challenge in the pet food industry as it is necessary that the agents are palatable, safe, cost-effective, and stable, as well as effective even at low amounts, such as lower than 1%.

So far, phosphoric acid is one of the most used antimicrobial agents in the pet food industry, in particular because, while it is effective and cheap, it does not negatively impact the palatability of the pet food. However, phosphoric acid needs to be added at a relative high level in order to provide microbial control. Addition of water due to the addition of phosphoric acid may impair the oxidative stability of fat and decrease the quality of pet food products. Furthermore, phosphoric acid cannot be considered as a natural solution. Last but not least, phosphorus intake is sometimes to be restricted, for example when kidney function is on decline, such as in the case of renal diseases.

Natural alternative compounds have been investigated, such as lactic acid. Patent application No. WO2012/018913 discloses the use of lactic acid, and in particular in an amount from 0.1% to 3%, to impart antimicrobial activity against *Salmonella* to a dry pet food. However, it was further observed that the use of lactic acid alone could sometimes degrade palatability, and more particularly dog's palatability.

It is an object of the present invention to provide a method for providing an antimicrobial activity against Salmonella, yeasts and/or molds to a pet food product effectively, and at least as effectively as lactic acid alone, while ensuring that palatability is at least maintained for both cats and dogs.

The method uses an antimicrobial composition that is effective at less than 1%, when incorporated into a pet food product.

The antimicrobial composition might have the specific ability to protect fats from microbial contaminations.

The composition may be made of natural antimicrobial agents.

SUMMARY OF THE INVENTION

The invention is defined in the appended claims and any other aspects or embodiments set forth herein are for illustration purposes only.

The present invention concerns a method for providing an antimicrobial activity against *Salmonella,* yeasts and/or molds to a pet food product, comprising:

a) providing a pet food product,
b) incorporating into said pet food product less than 1% of an antimicrobial composition consisting of:

(i) at least 30% of lactic acid, and
(ii) at least two carboxylic acids selected from the group consisting of acetic acid, butyric acid, isobutyric acid, valeric acid, and isovaleric acid. **BRIEF DESCRIPTION**

**OF THE FIGURES**

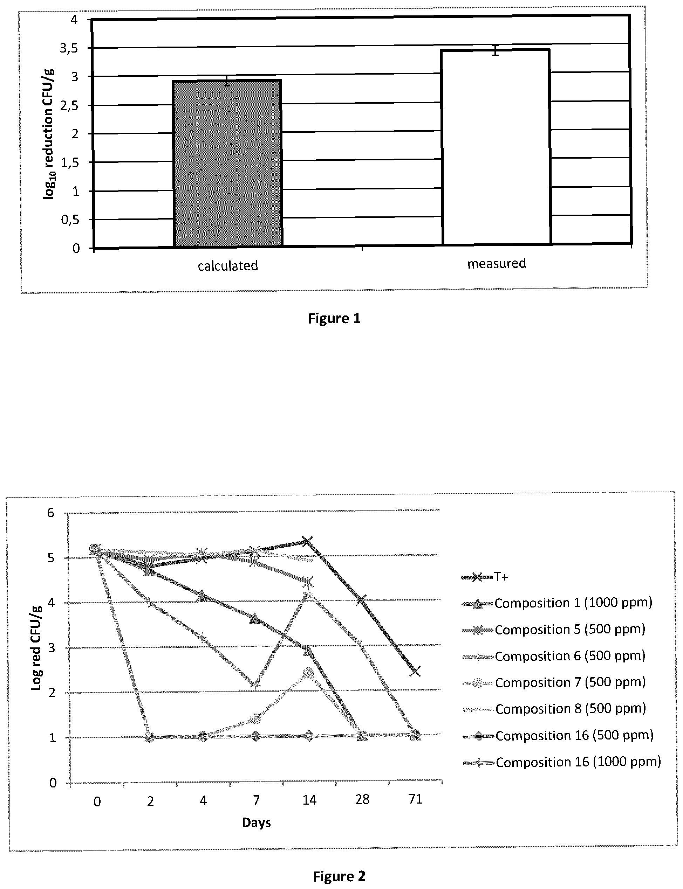

**Figure 1:** Antimicrobial activity of Composition 15 ("measured") versus the cumulative antimicrobial activity of Compositions 2, 3, 4 ("calculated"), after 20 hours of incubation in fat of a mixture in equal parts of *Salmonella enteric subsp. enterica* ser. Infantis, *Salmonella* ser. Mbandaka, and *Salmonella* ser. Senftenberg.

**Figure 2:** Antimicrobial activity over time of Composition 16 (500 or 1000 ppm) versus Compositions 1 (1000 ppm), 5 (500 ppm), 6 (500 ppm), 7 (500 ppm), 8 (500 ppm) on a mixture in equal parts of *Salmonella enteric subsp. enterica* ser. Newport, *Salmonella* ser. Senftenberg, and *Salmonella* ser. Typhimurium. T+ represents the Control which is free of any antimicrobial agent.

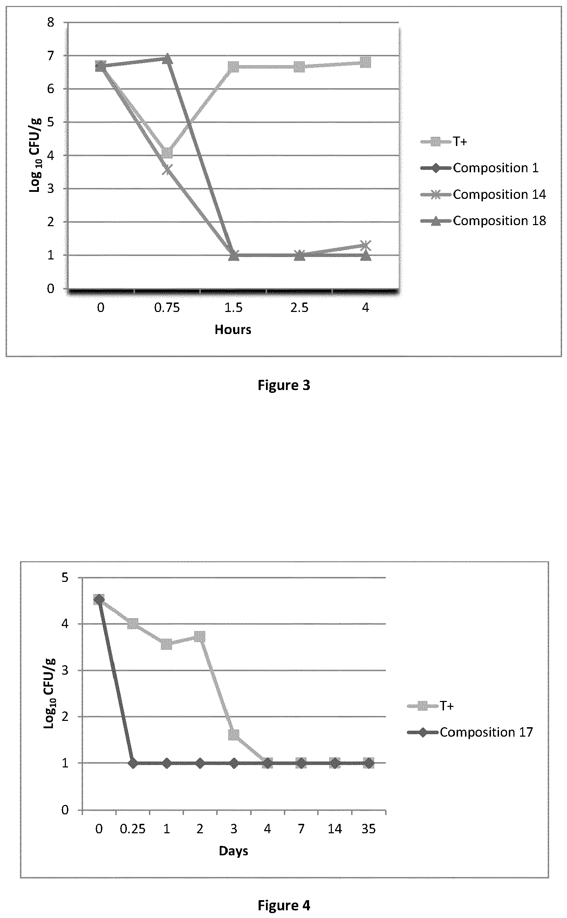

**Figure 3:** Antimicrobial activity over time of Composition 18 (1000 ppm) versus Compositions 1 (1000 ppm) and 14 (1000 ppm) on a mixture in equal parts of *Salmonella* ser. Infantis, *Salmonella* ser. Mbandaka, and *Salmonella* ser. Senftenberg. T+ represents the Control which is free of any antimicrobial agent.

**Figure 4:** Antimicrobial activity over time of Composition 17 (1000 ppm) on a mixture in equal parts of *Salmonella* ser. Newport, *Salmonella* ser. Senftenberg, and *Salmonella* ser. Typhimurium. T+ represents the Control which is free of any antimicrobial agent.

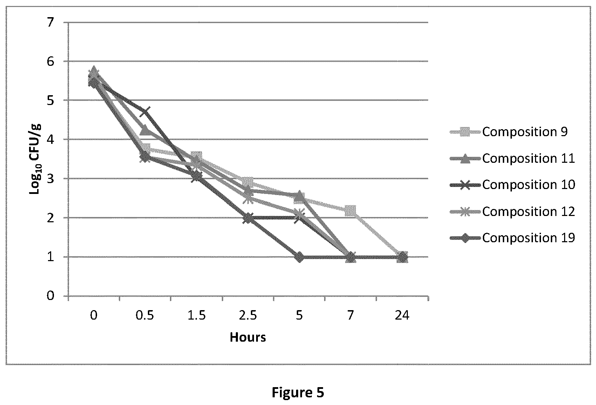

**Figure 5:** Antimicrobial activity over time of Composition 19 (1000 ppm) versus Compositions 9, 10, 11, 12 (1000 ppm) on a mixture in equal parts of *Salmonella* ser. Newport, *Salmonella* ser. Senftenberg, and *Salmonella* ser. Typhimurium.

## DEFINITIONS

Unless specifically stated otherwise, amounts or percentages are expressed herein by weight of a product reference.

In the present disclosure, ranges are stated in shorthand, so as to avoid having to set out at length and describe each and every value within the range. Any appropriate value within the range can be selected, where appropriate, as the upper value, lower value, or the terminus of the range. For example, a range of 0.1-1.0 (from 0.1 to 1) represents the terminal values of 0.1 and 1.0, as well as the intermediate values of 0.2, 0.3, 0.4, 0.5, 0.6, 0.7, 0.8, 0.9, and all intermediate ranges encompassed within 0.1-1.0, such as 0.2-0.5, 0.2-0.8, 0.7-1.0, etc. Moreover, the terms "at least" and "less than" encompass the hereafter cited value. For example, "at least 5 %" has to be understood as also encompassing "5%" and "less than 5%" to be understood as also encompassing "5%".

The term "about" as used herein when referring to a measurable value such as an amount, a temporal duration, and the like, is meant to encompass standard variations which can easily be determined by the skilled person in the technical domain of reference. Preferably, unless specifically stated otherwise these values are meant to encompass variations of $\pm 5\%$.

As used throughout, the singular form of a word includes the plural, and vice versa, unless the context clearly dictates otherwise. Thus, the references "a", "an", and "the" are generally inclusive of the plurals of the respective terms. For example, reference to "a method" or "a food" includes a plurality of such "methods" or "foods". Similarly, the words "comprise", "comprises", and "comprising" are to be interpreted inclusively. Likewise, the terms "include", "including" and "or" should all be construed to be inclusive. All these terms however have to be considered as encompassing exclusive instances that may also be referred to using words such as "consist of'.

The methods and compositions and other instances exemplified here are not limited to the particular methodologies, protocols, and reagents that are described herein because, as the skilled artisan will appreciate, they may vary.

Unless defined otherwise, all technical and scientific terms, terms of art, and acronyms used herein have the meanings commonly understood by the skilled artisan in the field(s) of the disclosure, or in the field(s) where the term is used. Although any products, methods, or other means or materials similar or equivalent to those described herein can be used, the preferred combinations, compositions, methods, or other means or materials are described herein.

The terms "pet" and "animal" are synonymous and mean any animal including, without limitation, cats, dogs, shrimps, fish, rabbits, poultry, guinea pigs, ferrets, hamsters, mice, gerbils, birds, horses, cows, goats, sheep, donkeys, pigs, and the like. In the context of the present disclosure, pets such as dogs, cats and fish are preferred. More particularly, dogs and cats are preferred.

As used herein, the term "antimicrobial" refers to any molecule, ingredient, product, composition that is able to reduce and/or prevent the growth of a number of undesired microorganisms over a period of time. It can for example refer to any molecule, ingredient, product, composition which is able to preserve a product by extending its shelf-life without becoming unfit for use or consumption due to microbial growth and is consistent with the definition promulgated by AAFCO.

The term "undesired microorganism" refers to pathogenic bacteria and/or spoilage microorganisms including yeasts and molds. The pathogenic bacteria may be Gram negative bacteria or Gram positive bacteria, such as *Salmonella, Listeria, Escherichia coli* or *Clostridium,* or mixtures thereof.

The term "population log reduction" or "number log reduction" or "log reduction" (wherein "log" is to be understood as "$\log_{10}$") is a mathematical term to show the number of living cells of the undesired microorganism killed by an antimicrobial composition. A "4 log reduction" means that the number of living cells at a defined sampling point is 10000 times smaller than the number of living cells at original sampling point. A "5 log reduction" means that the number of living cells is $10^5$ times smaller than the number of living cells at original sampling point. A "6 log reduction" means that the number of living cells is $10^6$ times smaller than the number of living cells at original sampling point.

All references herein to "lactic acid" or a "short chain fatty acid" of any sort or a "carboxylic acid" of any sort are intended to refer to these compounds or to a salt thereof. Furthermore, these compounds can be used in any appropriate form. In particular, materials, such as vegetable materials, or extracts or parts or extracts of parts of materials, including concentrate or juice, and which contain a non-negligible amount of lactic acid or short chain fatty acid or carboxylic acid according to the disclosure can be used. Pure compounds can also be used, which encompasses compounds with a purity of at least 50%, preferably at least 60%, more preferably at least 70%, more preferably at least 80%, more preferably at least 90%, more preferably at least 95%.

The term "pet food product" can either refer to a "pet food" or to a "pet food ingredient" or to both. The exact meaning of "pet food product" will be clear and unambiguous to the skilled artisan upon reading the present disclosure. Importantly, all references herein to a pet food product of any sort are intended to refer only to a pet food product that is manufactured and marketed for pets and which is likely to benefit from an antimicrobial composition as disclosed herein, in particular regarding both its efficacy and palatability properties.

The term "pet food" refers to a food that is intended for consumption by a pet. For instance, a "dog food" or a "dog food product" means a composition intended for consumption by a dog. As another example, a "cat food" or a "cat food product" means a composition intended for consumption by a cat. "Pet food" encompasses pet feed, such as fish feed, hereinafter also called "fish food". A "fish food" thus means a composition intended for consumption by a fish. The term "pet food" includes nutritionally-balanced pet foods, pet food supplements, treats, snacks, toys (chewable and/or consumable toys), drinks and beverages.

A "nutritionally-complete", "nutritionally-balanced" or "complete and nutritionally-balanced food" is one that contains all known required nutrients for the intended recipient or consumer of the food, in appropriate amounts and proportions based, for example, on recommendations of recognized or competent authorities in the field of companion animal nutrition. Such foods are therefore capable of serving as a sole source of dietary intake to maintain life, without the addition of supplemental nutritional sources. Thus, such pet foods do not comprise pet food supplements, treats, snacks, toys, drinks and beverages. A nutritionally-complete pet food is typically a dry pet food (having less than about 14% moisture and/or a water activity less than 0.65), canned or wet or high moisture-containing pet food (having more than about 50% moisture and/or a water activity more than 0.85) or semi-moist pet food (having from about 14% to about 50% moisture and/or a water activity from 0.65 to 0.85). Examples of nutritionally-complete pet foods are extruded pet foods, such as kibbles; chunk-in-"X" products, such as chunk-in-jelly products, chunk-in-gravy products; and loafs, such as terrines, pâtés, mousses.

The term "pet food supplement" means a product that is intended to be ingested in addition to the normal diet. Supplements may be in any form, e.g., solid, liquid, gel, tablets, capsules, powder, and the like. Preferably they are provided in convenient dosage forms. In some instances, they are provided in bulk consumer packages such as bulk powders, liquids, gels, or oils. In other instances, supplements are provided in bulk quantities to be included in other food items such as snacks, treats, supplement bars, beverages, and the like.

The term "treat" means any food item that is designed to be fed to a pet, preferably at non-meal time, by the owner to help, promote or sustain a bonding process between a pet and its owner. Examples of treats are bones, rawhides, sticks, pillows, biscuits, and the like. Treats may be nutritional or not, entirely or partially consumable (e.g., consumable toys). Treats often contain palatability enhancers in a manner comparable to nutritionally-balanced foods. Treats typically contain fats such as animal fats and/or vegetable oils and/or marine oils, either included into treats or coated onto treats.

An "extruded" pet food refers to any product having been transformed by extrusion or pelleting process. Preferably, an extruded product is a dry extruded product. In a particular instance, an extruded product is a kibble. In another particular instance, an extruded product is a fish pellet.

The term "fish pellet" refers to a fish food, in particular a dry extruded product (containing less than about 14% moisture, preferably less than about 9% moisture) which can be obtained by extrusion or pelleting process, preferably a pelleting process. Fish pellets are typically composed of one or more protein sources such as, but not limited to, marine protein including, inter alia, fish meal and krill meal, vegetable protein and slaughterhouse by-products.

The term "kibble" used herein refers to pieces of dry pet food formed by either a pelleting or extrusion process, preferably an extrusion process. The pieces can vary in sizes and shapes, depending on the process or the equipment. For instance, kibbles can have spherical, cylindrical, oval, or similar shapes. They can have a largest dimension of less than about 2 cm for example.

A "pet food ingredient" is any compound, composition or material that is suitable for consumption by pets and that can be added into a pet food. Non-limiting examples of pet food ingredients are animal meals, fresh meats, animal digests, fats, vegetable flours, yeasts, grains, palatability enhancers, nutrients, additives, etc.

As used herein, a "fat-containing pet food product" refers to a "pet food product" containing at least one fat which can be spoiled by undesired microorganisms. The fat content of a "fat-containing pet food product" is not "traces of fat". The term "traces of fat" as used herein means negligible fat amount, or an insignificant fat amount, or an undetectable fat amount (below the threshold level determined by standard methods, such as described in European Regulation EC n° 152/2009 Determination of crude oils and fats- Procedure B - available online). Typically, a nutritionally-balanced pet food, a fat, a palatability enhancer, an animal meal or a vegetable flour is a fat-containing pet food product.

Examples of fats include fats or oils from any origin, such as animal fats, vegetable oils or marine oils. Vegetable oils which are available in large quantities are typically canola oil, soybean oil, corn oil, olive oil, sunflower oil, linseed oil, palm oil, rapeseed oil, sesame oil, coconut oil, safflower oil, and the like, as well as by-products thereof. Typical animal fats are pork fat, chicken fat, poultry fat, lamb tallow or beef tallow and the like, as well as by-products thereof. Marine oils are typically tuna oil, sardine oil, salmon oil, herring oil, mackerel oil, sand eel oil, trout oil, tilapia oil, catfish oil, anchovy oil, fish oil, menhaden oil and the like, as well as by-products thereof. Also are encompassed herein the fats that are derived from animal, vegetable, marine sources.

Fats are for example fatty acid esters or free fatty acids which are saturated or unsaturated and they can be endogenous (such as fats contained in animal digests, animal meals or vegetable flours, etc.) or exogenous.

As used herein, the term "palatability" refers to the overall willingness of a subject to eat a certain food composition. Whenever a subject shows a preference, for example, for one of two or more foods, the preferred food is more "palatable", and has "enhanced palatability". Different methods exist to assess palatability, such as palatability of pets. Examples of such methods involve exposure of pets to pet foods either simultaneously (for example, in side-by-side, free-choice comparisons, e.g., by measuring relative consumption of at least two different pet foods), or sequentially (e.g., using single bowl testing methodologies). Advantageously, at least two different methods may be used to consolidate the thus obtained results on palatability of a given pet food.

The terms "palatability enhancer" and any other similar terms (e.g., "palatability enhancing ingredient") mean any material that enhances the palatability of a pet food to an animal. Typically, a palatability enhancer is a liquid or dry edible composition that provides an aroma, taste, aftertaste, smell, mouth feel, texture, and/or organoleptic sensation that is appealing or pleasing to the subject. Non-limiting examples of palatability enhancing ingredients are animal digests, inorganic phosphate compounds (such as polyphosphates, pyrophosphates, and monophosphates), Maillard ingredients, yeast products (such as yeast extracts, yeast hydrolysates, yeast autolysates, yeast creams, dried yeasts) etc.

The term "animal digest" means herein material which results from chemical and/or enzymatic hydrolysis of clean, undecomposed animal tissue, such as from poultry, pork, beef, sheep, lamb, fish etc. In some instances, an animal digest as used herein is fully consistent with the definition promulgated by the Association Of American Feed Control Officials, Inc. (AAFCO).

The term "animal meal" or "meat meal" is meat that has been dried and ground to form substantially uniform-sized particles. For example, the Association of American Feed Control Officials (AAFCO) defines "meat meal" as the rendered product from mammal tissues, exclusive of any added blood, hair, hoof, horn, hide trimmings, manure, stomach and rumen contents except in such amounts as may occur unavoidably in good processing practices, and shall not contain extraneous materials not provided for by this definition. Non-limiting examples of meat meals suitable for the compositions disclosed herein include beef meal, poultry meal, pork meal, turkey meal, fish meal and combinations thereof. Beef meal is the rendered product from beef tissues, exclusive of any added blood, hair, hoof, horn, hide trimmings, manure, stomach and rumen contents, except in such amounts as may occur unavoidably in good processing practices. Poultry meal is the dry rendered product from a combination of clean flesh and skin with or without accompanying bone, derived from the parts of whole carcasses of poultry or a combination thereof, exclusive of feathers, heads, feet, and entrails. Pork meal is the dry rendered product from a combination of clean flesh and skin (with or without accompanying bone), derived from the parts of whole carcasses of pigs or combination thereof, exclusive of head, feet or entrails. Turkey meal is the dry rendered product from a combination of clean flesh and skin with or without accompanying bone, derived from the parts of whole carcasses of turkeys, exclusive of feathers, heads, feet, or entrails. Fish meal is the clean, dried, ground tissue of undecomposed whole fish or fish cuttings, either or both, with or without the extraction of part of the oil.

The term "vegetable flour" (or vegetable meal) encompasses cereal flours such as wheat, wheat gluten, barley, rice, oat, corn and corn gluten flour; legume flours such as soy and pea flour; and vegetable flours such as potato, and cassava flour. Other such flours are known to skilled artisans.

The term "natural origin" or "natural" is intended to mean a compound that exist or is produced in nature. Such compounds can be extracted or isolated from their natural environment by any suitable means. Of course, such compounds can also be synthetically produced by the hand of man and are then referred to as "synthetic".

"Coating" or "coated", as used herein, refers to the topical deposition of an ingredient or a composition onto the surface of the pet food, such as by spraying, dusting, and the like.

"Inclusion" or "included", as used herein, refers to the addition of an ingredient or a composition into the core of a pet food. If necessary, further processing steps can be performed for obtaining the final pet food product (including thermal treatment and/or extrusion and/or retorting, etc).

"Containers" include, but are not limited to, bags, boxes, cartons, bottles, packages of any type or design or material, over-wrap, shrink-wrap, stapled or otherwise affixed elements, or combinations thereof.

The term "single package" means that the components of a kit are physically associated in or with one or more containers and considered a unit for manufacture, distribution, sale, or use. Containers include, but are not limited to, bags, boxes, cartons, bottles, packages of any type or design or material, over-wrap, shrink-wrap, stapled or otherwise affixed components, or combinations thereof. A single package may be containers of individual components physically associated such that they are considered a unit for manufacture, distribution, sale, or use.

As used herein, "means for communicating information or instructions" is a kit component under any form suitable for providing information, instructions, recommendations, and/or warranties, etc. Such a means can comprise a document, digital storage media, optical storage media, audio presentation, visual display containing information. The means of communication can be a displayed web site, brochure, product label, package insert, advertisement, visual display, etc.

## DESCRIPTION OF SOME EMBODIMENTS OF THE INVENTION

The inventors herein show for the first time that a combination including lactic acid and at least two specific carboxylic acids is surprisingly advantageous compared to other combinations and compared to lactic acid or other acids only. In particular, when incorporated in a pet food product, such a combination is able to inhibit microbial activity over time in said pet food product without impairing palatability thereof (compared to the same pet food product without any antimicrobial composition incorporated therein).

### Pet food product

The antimicrobial composition and the pet food product as described in this section are those used in the method for providing an antimicrobial activity according to the invention which is described later in the description.

The pet food comprises less than about 1% of an antimicrobial composition consisting of:

(i) at least 30% of lactic acid, and
(ii) at least two carboxylic acids selected from the group consisting of acetic acid, butyric acid, isobutyric acid, valeric acid, and isovaleric acid.

This antimicrobial combination thus contains, in addition to at least 30% of lactic acid, at least two specific carboxylic acids. The pet food industry is currently concerned about the use of natural antimicrobial agents such as lactic acid because of their potential negative influence on pet food palatability. However, the inventors herein show that the palatability to cats and dogs of a pet food product comprising less than about 1% of an antimicrobial composition according to the disclosure is not negatively impacted. The inventors even show that it can exhibit enhanced palatability, in particular to dogs, compared to the palatability when lactic acid alone is used.

The inventors demonstrated that lactic acid combined with at least two specific carboxylic acids as claimed provide a significant antimicrobial activity, and can even provide a synergistic antimicrobial activity.

The antimicrobial composition has antimicrobial activity against pathogenic bacteria and/or spoilage microorganisms including yeasts and molds. The antimicrobial composition has antimicrobial activity against *Salmonella,* in particular *Salmonella enterica* subsp. *enterica.*

The antimicrobial composition as above described consists of:

(i) at least 30% of lactic acid, and
(ii) at least two carboxylic acids selected from the group consisting of acetic acid, butyric acid, isobutyric acid, valeric acid, and isovaleric acid.

The composition preferably provides an undesired microorganism population log reduction of at least about 2, preferably at least about 3, more preferably at least about 4, and more preferably at least about 5. Such a log reduction may be achieved in accordance with the present disclosure after only a relatively short exposure time. For example at temperatures of about 30 to 40°C (temperature suitable for the development of microorganisms such as *Salmonella),* the desired log reduction may be achieved after exposure for only 48 hours, preferably 24 hours, more preferably 10 hours, more preferably 5 hours, more preferably 2 hours, more preferably 1 hour.

In particular, the antimicrobial composition comprises less than 95%, preferably less than 90%, more preferably less than 85%, more preferably less than 80% of lactic acid.

Said lactic acid can be a salt of lactic acid, such as sodium lactate, calcium lactate or potassium lactate.

Importantly, this combination of antimicrobial agents is effective even at low amounts. In particular, the described pet food product comprises less than 1%, preferably less than 0.9%, more preferably less than 0.8%, more preferably less than 0.7%, more preferably less than 0.6%, more preferably less than 0.5%, more preferably less than 0.4%, more preferably less than 0.3%, more preferably less than 0.25%, more preferably less than 0.2%, more preferably less than 0.15%, more preferably less than 0.1% of the antimicrobial composition. In particular, the described pet food product comprises more than 0.01%, preferably more than 0.02%, more preferably more than 0.03% of the antimicrobial composition.

In addition to lactic acid, at least two specific carboxylic acids are contained in the antimicrobial composition of the disclosure. Said carboxylic acids are selected from the group consisting of acetic acid, butyric acid, isobutyric acid, valeric acid, and isovaleric acid, preferably from the group consisting of acetic acid, butyric acid, valeric acid, and isovaleric acid.

The essential presence of at least two carboxylic acids in addition to lactic acid has been demonstrated as reported in the following examples. In particular, the antimicrobial composition contains two or three carboxylic acids. In particular, the antimicrobial composition contains two carboxylic acids. In particular, the antimicrobial composition contains three carboxylic acids.

In particular, the antimicrobial composition comprises more than 5%, preferably more than 10%, more preferably more than 15%, more preferably more than 20%, more preferably more than 25% of carboxylic acids. In particular, the antimicrobial composition comprises less than 70% of carboxylic acids.

Advantageously, lactic acid and carboxylic acids of the antimicrobial composition are of natural origin. Alternatively, lactic acid and carboxylic acids of the antimicrobial composition are synthetic.

Advantageously, the antimicrobial composition use in the method of the invention is in a powder form or in a liquid form.

Thus, in the method of the present invention is provided a pet food product, further comprising an appropriate carrier in combination with the antimicrobial composition. The skilled person is able to determine appropriate carriers depending on the use of the pet food product and in particular also depending on the form of the composition, i.e. liquid or powder, and/or on the hydrophilic or hydrophobic form of the composition.

As above explained, the term "pet food product" refers to the pet food product that benefit from the antimicrobial composition as disclosed herein. A pet food product according to the disclosure can be a pet food or a pet food ingredient (which may in turn be incorporated into a pet food). Preferably, said pet food product is a fat-containing pet food product.

In particular, the pet food product is a pet food ingredient, preferably selected from the list consisting of a fat, an animal meal, a vegetable flour, and a palatability enhancer. This particular example concerns a protected pet food ingredient comprising an antimicrobial composition of the disclosure, which pet food ingredient can then be added to a pet food. In other terms in this particular example, the antimicrobial composition aims to protect the pet food ingredient (but not the pet food to which the pet food ingredient can be added).

In a first alternative, the pet food ingredient is a fat, preferably selected from animal fat, vegetable oil or marine oil, more preferably animal fat or marine oil.

Yet more particularly, said animal fat is selected from pork fat, chicken fat, poultry fat, lamb tallow or beef tallow, and the like, as well as by-products thereof. For example, said animal fat is poultry fat.

Yet more particularly, said vegetable oil, is selected from canola oil, soybean oil, corn oil, olive oil, sunflower oil, linseed oil, palm oil, rapeseed oil, sesame oil, coconut oil, safflower oil, and the like, as well as by-products thereof. More preferably, said vegetable oil is sunflower oil or canola oil.

Yet more particularly, said marine oil, is selected from tuna oil, sardine oil, salmon oil, herring oil, mackerel oil, sand eel oil, trout oil, tilapia oil, catfish oil, anchovy oil, fish oil, menhaden oil and the like, as well as by-products thereof. More preferably, said marine oil is fish oil, salmon oil or tuna oil.

In a second alternative, the pet food ingredient is an animal meal or a vegetable flour, preferably containing fat.

In a third alternative, the pet food ingredient is a palatability enhancer, preferably containing fat.

In particular, the pet food product is a pet food, preferably a dog food or a cat food. This particular example concerns a protected pet food comprising an antimicrobial composition of the disclosure. In other terms in this particular example, the antimicrobial composition aims to protect the pet food. Regarding this example, the antimicrobial activity can be provided by adding directly the antimicrobial composition to the pet food, or by adding the antimicrobial composition to a pet food ingredient which is further added to the pet food. For this later alternative, both pet food ingredient and pet food can benefit from the antimicrobial activity of the composition.

Preferably, the pet food is a nutritionally-balanced pet food, more preferably selected from the list consisting of extruded pet foods, such as kibbles, fish pellets; chunk-in-"X" products, such as chunk-in-jelly products, chunk-in-gravy products; and loafs, such as terrines, pâtés, mousses. In particular, the pet food product is a kibble.

Method for preparing a pet food product (not part of the invention)/Method for providing an antimicrobial activity against one or more undesired microorganisms to a pet food product

A pet food product may be prepared

a) providing a pet food product,
b) incorporating less than 1% of an antimicrobial composition as above described into said pet food product.

The invention concerns a method for providing an antimicrobial activity against one or more undesired microorganisms, preferably against *Salmonella,* to a pet food product, comprising:

a) providing a pet food product,
b) incorporating less than 1% of an antimicrobial composition as above described into said pet food product.

The antimicrobial composition provides an antimicrobial activity against one or more undesired microorganisms by reducing and/or preventing the number of undesired microorganisms over a period of time. The antimicrobial composition has antimicrobial activity against *Salmonella*, yeasts and/or molds.
Very advantageously, this antimicrobial efficacy is not detrimental to pet food product palatability. Indeed, the palatability to cats and dogs of a pet food product comprising less than 1% of an antimicrobial composition according to the disclosure is not negatively impacted.
The composition can be incorporated into any pet food product, preferably a fat-containing pet food product. In the particular pet food technical field and as above explained, the pet food product of step a) of the foregoing methods can either be a pet food or a pet food ingredient.
The pet food product of step a) can be pet food, in particular an extruded pet food such as a kibble.
Step b) of the above described methods can comprise the following steps:

i) preconditioning by mixing wet and dry ingredients at elevated temperature to form a kibble dough;
ii) extruding the kibble dough at high temperature and pressure;
iii) drying the extruded kibble; and
iv) coating the dried kibble with one or more fat(s) and/or one or more palatability-enhancer(s);

wherein the antimicrobial composition is incorporated to the kibble at step i) and/or iv).
For example, the antimicrobial composition is incorporated to the kibble at step iv), by coating the dried kibble with at least one fat comprising the antimicrobial composition. Preferably, the dried kibble is coated with 1% to 10% of said fat, more preferably from 2% to 6% of said fat.
The pet food product of step a) can be a pet food ingredient, preferably selected from the list consisting of a fat, an animal meal, a vegetable flour, and a palatability enhancer.
Regarding this particular example, step b) of the above described methods can be performed by mixing the antimicrobial composition with the pet food ingredient.
The above-mentioned technical features recited for the pet food product and the antimicrobial composition also apply herein.

Uses (not part of the invention)

An object of the disclosure relates to the use of an antimicrobial composition consisting of:

(i) at least 30% of lactic acid, and
(ii) at least two carboxylic acids selected from the group consisting of acetic acid, butyric acid, isobutyric acid, valeric acid, and isovaleric acid,

for providing an antimicrobial activity against one or more undesired microorganisms, preferably against *Salmonella* and/or molds, more preferably against *Salmonella,* to a pet food product.
More particularly, an antimicrobial composition of the disclosure can be used for providing an antimicrobial activity against one or more undesired microorganisms to a pet food product while not adversely affecting the palatability to pets, preferably cats and/or dogs, more preferably cats and dogs, of a pet food comprising or consisting of said pet food product.
In particular, the composition is an amount of less than 1% (by weight of petfood product).
The above-mentioned technical features recited for the pet food product and the antimicrobial composition also apply herein.

Kit (not part of the invention)

Another aspect of the present disclosure concerns a kit comprising, in one or more containers in a single package:

- one or more pet food products as above defined; and
- an antimicrobial composition as above described.

Particular kits according to the present disclosure further comprise a means for communicating information or instructions, to help using the kits' elements.

**EXAMPLES**

1. **MATERIALS AND METHODS**

**1.1. Preparation of antimicrobial compositions**

The liquid antimicrobial compositions listed in Table 1 were prepared, by mixing one or more of the following natural compounds (except phosphoric acid): phosphoric acid (Brenntag - 80% Purity), butyric acid (Penta - >95% de purity / Naturamole - >95% purity), valeric acid (Penta - >95% purity), iso-valeric acid (Naturamole - >95% purity), lactic acid (Jungbunzlauer - 80% purity / Naturamole - >95% purity), caprylic acid (Penta - >95% purity), oregano oil (Kalsec), caproic acid (Sigma Aldrich - >95%), lauric acid (Sigma Aldrich - >95%), acetic acid (Naturamole - >95%).

*Table 1*

|  | Ingredient(s) |
|---|---|
| Composition 1 | Phosphoric acid |
| Composition 2 | Butyric acid |
| Composition 3 | Valeric acid |
| Composition 4 | Lactic acid |
| Composition 5 | 33.3% Butyric acid<br>33.3% Valeric acid<br>33.3% Caprylic acid |
| Composition 6 | 33.3% Butyric acid<br>33.3% Oregano oil<br>33.3% Lactic acid |
| Composition 7 | 33.3% Valeric acid<br>33.3% Oregano oil<br>33.3% Lactic acid |
| Composition 8 | 33.3% Valeric acid<br>33.3% Oregano oil<br>33.3% Butyric acid |
| Composition 9 | 8% Butyric acid<br>18% Caproic acid<br>74% Lactic acid |
| Composition 10 | 8% Butyric acid<br>18% Lauric acid<br>74% Lactic acid |
| Composition 11 | 8% Caproic acid<br>18% Acetic acid |

(continued)

| | Ingredient(s) |
|---|---|
| | 74% Lactic acid |
| Composition 12 | 8% Lauric acid<br>18% Acetic acid<br>74% Lactic acid |
| Composition 13 | 25% Lactic acid<br>25% Valeric acid<br>25% Caprylic acid<br>25% Butyric acid |
| Composition 14 | 12.5% butyric acid<br>87.5% lactic acid |
| Composition 15 | 12.5% Butyric acid<br>12.5% Valeric acid<br>75% Lactic acid |
| Composition 16 | 33.3% Butyric acid<br>33.3% Valeric acid<br>33.3% Lactic acid |
| Composition 17 | 33.3% Butyric acid<br>33.3% Iso-valeric acid<br>33.3% Lactic acid |
| Composition 18 | 12.5% Butyric acid<br>12.5% Iso-valeric acid<br>75% Lactic acid |
| Composition 19 | 8% Butyric acid<br>18% Acetic acid<br>74% Lactic acid |
| Composition 20 | 33.3% Butyric acid<br>33.3% Acetic acid<br>33.3% Lactic acid |

Compositions 1-14 are out of the invention and compositions 15-20 are according to the present invention.

**1.2. Palatability tests**

**1.2.1. Preparation of pet foods comprising antimicrobial compositions**

Nutritionally-balanced dry kibbles (Diet "X") suitable for consumption by pets and obtained after an extrusion and drying process were coated with 6% fat comprising antimicrobial compositions as prepared in Example 1.1 (composition "X") and palatability-enhancer(s). These nutritionally-balanced dry kibbles were free of any undesired microorganism.

Dry kibbles for dogs and cats were then coated with a palatability-enhancing composition.

**1.2.2. Determination of palatability with a two-bowl** test

Principle of the two-bowl test:

The test is based on the postulate whereby the more food consumed, the more palatable it is.

Individual versus (Two bowls) palatability tests, based on the comparison between two foods, were carried out. Tests are performed either on panel of 36 dogs or on panel of 40 cats, depending on the test's objectives.

Operating method of the test:

- Identical amounts of food A and food B were weighed out and placed in identical bowls. The amount present in each ration enables the daily requirements to be met.

- Distribution of the bowls:

    Dog test: the bowls were placed in an individual feed trough accessible to dogs.

    Cat test: The bowls were presented at the same time to each cat in an individual loose box and their positions were switched at each meal to avoid a choice led by handedness.

- Duration of the test:

    * Cat test: from about 15 minutes to about 20 hours (if one of the two bowls was entirely eaten before the end of the test, the two bowls were removed, and the test was stopped);

    * Dog test: from about 15 minutes to about 30 minutes (if one of the two bowls was entirely eaten before the end of the test, the two bowls were removed, and the test was stopped).

Parameters studied

- Measured parameter: amount of each food consumed by the end of the test;

- Calculated parameters: individual consumption ratio in % (CR)

$$CRA = \text{consumption of A (g)} \times 100/(\text{consumption of A+B) (g)}$$

$$CRB = \text{consumption of B (g)} \times 100/(\text{consumption of A+B) (g)};$$

⇨ Average consumption ratio (ACR) = average of all individual ratios (an equal importance is given to each animal, regardless of its size and of its corresponding consumption).

If animals have higher or lower consumption compared to predetermined values (which are function of, e.g., the animal weight and/or metabolism), they are not taken into account into statistical treatment.

Statistical analysis:

Statistical analysis was used to determine if there was a significant difference between the 2 ratios. A Student's t-test with 3 error thresholds, namely 5%, 1% and 0.1%, was performed.
A Chi-square test was used to determine if there was a significant difference between the number of pets with Food A as first food eaten and the number of pets with Food B as first food eaten.
Significance levels are noted as below:

| NS | not significant | $(p > 0.05)$ |
|---|---|---|
| * | significant | $(p \leq 0.05)$ |
| ** | highly significant | $(p \leq 0.01)$ |
| *** | very highly significant | $(p \leq 0.001)$ |

**1.3. *Salmonella* inhibition**

Bacterial strains and culture medium

Six serovars of *Salmonella enterica* subsp. *enterica* were used in these studies: *Salmonella* ser. *Infantis* (CIP103549), *Salmonella* ser. *Mbandaka* (CIP105859), and *Salmonella* ser. *Senftenberg* (isolate from pork/poultry from ANSES collection) for Example 1, Example 3 and Example 6 or *Salmonella* ser. *Newport, Salmonella* ser. *Senftenberg,* and *Salmonella* ser. *Typhimurium* (all isolated from pet food) for Example 2, Example 4, and Example 5. All strains were kept in collection at -80 °C in glycerol broth. Bacterial strains were cultured in Brain Heart Infusion agar and subcultured in Brain Heart Infusion broth at 37 °C for 20±2h (BHI, VWR, USA). *Salmonella* count in poultry fat was carried out using Xylose Lysine Deoxycholate agar (XLD, VWR, USA) for Example 1, Example 3, and Example 6 or Violet Red Bile Glucose agar (VRBG, BioRad, USA) for Example 2, Example 4 and Example 5. *Salmonella* detection was done following modified EN ISO 6579-1 in 125 g of poultry fat.

Inoculum preparation

Two types of matrix inoculum were used. (i) Wet inoculum preparation: Following subcultures, *Salmonella* strains were harvested by centrifugation at the early stationary phase (3750 x g for 10 min) from BHI broth then washed and resuspended in 0.1% peptone (VWR, USA). Each individual strain was finally mixed together at equal parts to get a standard inoculum. (ii) Dry inoculum preparation: Following subcultures, BHI broth at the early stationary phase was spread into BHI agar plates. After incubation, resulting bacterial lawn was collected in 0.1% peptone by loosening the lawn with a sterile spreader. The strains were then washed, resuspended in 0.1% peptone, mixed together at equal parts and finally blended with meat meal as a carrier. This mixture was dried at room temperature to a low and stable moisture level.

Inoculation of poultry fat

To achieve a concentration of around 5 - 6 logic CFU/g, wet (Example 1 to 5) or dry (Example 6) inoculum were added at 0.1% (w/w) into poultry fat then, mixed thoroughly and followed by a 24-hours physiological adaptation to the matrix. During all the experiments poultry fat was stored at 35°C (wet inoculum) or 40°C (dry inoculum). Then antimicrobial solutions were added to the matrix (T0) and compared to the Control (T+) free of any antimicrobial agent. Sampling points for *Salmonella* count and detection were spread over time according to the examples.

**1.4. Fungus inhibition**

Fungal strain and culture medium

Three fungal strains isolated from pet food products were used in the study: *Eurotium amstelodami, Aspergillus niger* and *Penicillium chrysogenum. P. chrysogenum* was cultured and subcultured in Potato Dextrose Agar (PDA) at 25°C for 72h. *E. amstelodami* and *A. niger* were cultured and subcultured in Potato Dextrose Agar + 40% sucrose at 28°C for 72h.

Inoculum preparation

Following subcultures, each strain was collected in 0.1% peptone by loosening the culture with a sterile spreader. The strains were then washed, resuspended in 0.1% peptone, standardized using Malassez cell count and added at around 3 log UFC/g within Deepwell 2 ml 96-well plates (Axygen, AM-2ML-RD) previously filled with 1 ml of a liquid unacidified palatability enhancer supplemented with the desired antimicrobial composition. Controls (w/o antimicrobials) were included for the qPCR analysis. After incubation for 72 hours at 25°C, the cultures were harvested by pipetting 150 $\mu$l into new 96-wells plates (Axygen, AM-2ML-RD) suitable for DNA extraction.

DNA extraction

Total genomic DNA was extracted from each sample according to the method described by Ladirat et al., (2013) with some minor adjustments: The samples were initially mixed with 300 $\mu$l lysis buffer (Agowa, Berlin, Germany), 500 $\mu$l zirconium beads (0.5 mm), and 500 $\mu$l phenol, before being introduced to a BeadBeater (BioSpec Products, Bartlesville, OK, USA) for 3 minutes.

Quantitative PCR (qPCR)

To quantify the effect of the antimicrobial composition, the amount of total genomic DNA in each sample was analyzed by means of quantitative PCR (qPCR). The extracted genomic DNA was diluted 10-50 times and used as template for quantitative PCR analysis as a read-out for growth or growth inhibition. The reaction mixture contained 12.5 $\mu$l 2x Mastermix (Diagenode), 10 $\mu$M Forward primer, 10 $\mu$M Reverse primer, 5 $\mu$M probe (labelled with FAM and with MGB quencher), plus template (chromosomal DNA) and mQ to 25 $\mu$l total volume. qPCR was performed on an ABI 7500 Fast System (Taqman-MGB). The cycle conditions were 2 minutes at 50°C, 10 minutes at 95°C, followed by 40 cycles of 15 seconds at 95°C, 1 minute at 60°C.

Use of qPCR data as measure for inhibition

The results of the qPCR analysis were analyzed as follows. The cycle threshold value (Ct) was used as a base to evaluate antimicrobial efficiency. Ct value is defined as the cycle number when the fluorescence of a PCR product can be detected above the background signal. The Ct values of the starting point (inoculum) and the time of harvesting of the controls without antimicrobial composition were compared. The Ct value at time of harvesting for the growth control not containing any antimicrobial composition should be lower than the Ct value of the starting point (caused by growth and therefore more DNA and thus lower Ct values) and the difference (Ctt=0 minus Ctt=harvesting) resulted in a $\Delta$Ct value that represented the maximum outgrowth during the incubation. At the same time, this value can also be regarded as the maximum inhibition: if the Ct value at the time of harvesting is equal to the Ct value at the start, no growth and therefore maximum inhibition has occurred. Therefore, this $\Delta$Ct value was also used as the maximum inhibition.

To score the effect of the antimicrobial composition, the Ct value of the samples was compared to the Ct value of control without antimicrobial composition (growth control) at the time of harvesting. If the test compound fully inhibited growth, the Ct value of the test sample resembles that of the starting point, resulting in a $\Delta$Ct value that is equal to the maximum inhibition. If on the other hand, the Ct value of the test sample equaled that of the control without inhibitors, then the $\Delta$Ct value equals zero, indicating no inhibition whatsoever.

## 2. RESULTS

### 2.1. EXAMPLE 1

Compositions of Table 2 were evaluated.

*Table 2*

|               | Ingredient(s)                                          |
|---------------|--------------------------------------------------------|
| Composition 2 | Butyric acid                                           |
| Composition 3 | Valeric acid                                           |
| Composition 4 | Lactic acid                                            |
| Composition 15| 12.5% Butyric acid 12.5% Valeric acid 75% Lactic acid |

Antimicrobial efficacy

The antimicrobial synergy of lactic acid, valeric acid, and butyric acid in Composition 15 was assessed.

Each component was tested alone when added to fat (as described in 1.2): 7.25 ppm of butyric acid (Composition 2), 7.25 ppm of valeric acid (Composition 3) and 43.5 ppm of lactic acid (Composition 4) were respectively tested for their antimicrobial efficacy against *Salmonella*. The sum of the antimicrobial effects of the individual components (compositions 2-4) was calculated ("calculated").

58 ppm of Composition 15 (7.25 ppm of butyric acid + 7.25 ppm of valeric acid + 43.5 ppm of lactic acid) was also added to fat and tested for its antimicrobial efficacy against *Salmonella* ("measured").

As illustrated in Figure 1, the antimicrobial effect of the Composition 15 is greater than the sum of the antimicrobial effects of the individual components (Compositions 2-4), demonstrating a synergistic efficacy of the components in Composition 15.

<u>Palatability</u>

Compositions 2, 3, 4, 15 were added in different amounts to fat (as described in 1.2) and coated on dry kibbles (as described in 1.3).

The results of dogs' and cats' palatability are presented in Table 3.

*Table 3*

| Food A | | | Food B | DOG | | | CAT | | |
|---|---|---|---|---|---|---|---|---|---|
| | | | | % A | %B | Stat[1] | % A | % B | Stat[1] |
| Diet 2 | Butyric acid | 500 ppm | Control Diet | 18 | 82 | *** | 55 | 45 | NS |
| Diet 3 | Valeric acid | 500 ppm | Control Diet | 28 | 72 | ** | | | |
| Diet 4 | Lactic acid | 500 ppm | Control Diet | 32 | 68 | ** | 42 | 58 | NS |
| Diet 15 | 12.5% Butyric acid 12.5% Valeric acid | 500 ppm | Control Diet | 80 | 20 | *** | 56 | 44 | NS |
| | 75% Lactic acid | 1000 ppm | Control Diet | 73 | 27 | *** | 49 | 51 | NS |
| [1] Statistical significance | | | | | | | | | |

As shown in Table 3, while butyric acid, valeric acid, and lactic acid significantly decreased dogs' palatability when added alone in diets, their combination surprisingly increased diets consumptions.

Moreover, Composition 15 does advantageously not deteriorate cats' palatability.

## 2.2. EXAMPLE 2

Compositions of Table 4 were evaluated.

*Table 4*

| | Ingredient(s) |
|---|---|
| Composition 1 | Phosphoric acid |
| Composition 5 | 33.3% Butyric acid 33.3% Valeric acid 33.3% Caprylic acid |
| Composition 6 | 33.3% Butyric acid 33.3% Oregano oil 33.3% Lactic acid |
| Composition 7 | 33.3% Valeric acid 33.3% Oregano oil 33.3% Lactic acid |
| Composition 8 | 33.3% Valeric acid 33.3% Oregano oil 33.3% Butyric acid |
| Composition 16 | 33.3% Butyric acid 33.3% Valeric acid 33.3% Lactic acid |

<u>Antimicrobial efficacy</u>

Antimicrobial efficacy of Compositions 5, 6, 7, 8, 16 was tested when added at 500 ppm in fat and compared to antimicrobial efficacy of phosphoric acid (Composition 1) when added at 1000 ppm in fat. The antimicrobial efficacy of Composition 16 at 1000 ppm in fat was also evaluated.

As illustrated in Figure 2, Composition 16 had totally inhibited the growth of inoculated bacteria 2 days after inoculation, whatever the amount of incorporation (500 ppm or 1000 ppm). This inhibition was maintained at 71 days after inoculation.

Composition 7 had also totally inhibited the growth of inoculated bacteria 2 days after inoculation. However, *Salmonella* were again beyond the counting threshold ($1 \log_{10}$ UFC/g) 7 days after inoculation.

On the contrary, *Salmonella* was still detected 1 month after inoculation when phosphoric acid (Composition 1) is added in the fat. Compositions 5, 6, and 8 were not good candidates for inhibiting microbial activity either.

Palatability

The results of dogs' and cats' palatability are presented in Table 5.

*Table 5*

| Food A | | | Food B | DOG | | | CAT | | |
|---|---|---|---|---|---|---|---|---|---|
| | | | | % A | %B | Stat[1] | % A | % B | Stat[1] |
| Diet 1 | Phosphoric acid | 1000 ppm | Control Diet | 71 | 29 | *** | 49 | 51 | NS |
| Diet 5 | 33.3% Butyric acid 33.3% Valeric acid | 500 ppm | Control Diet | 46 | 54 | NS | 49 | 51 | NS |
| | 33.3% Caprylic acid | 1000 ppm | Control Diet | 55 | 45 | NS | 52 | 48 | NS |
| Diet 6 | 33.3% Butyric acid 33.3% Oregano oil | 500 ppm | Control Diet | 56 | 44 | NS | 47 | 53 | NS |
| | 33.3% Lactic acid | 1000 ppm | Control Diet | 28 | 72 | ** | 49 | 51 | NS |
| Diet 7 | 33.3% Valeric acid 33.3% Oregano oil | 500 ppm | Control Diet | 46 | 54 | NS | 52 | 48 | NS |
| | 33.3% Lactic acid | 1000 ppm | Control Diet | 27 | 73 | ** | 48 | 52 | NS |
| Diet 16 | 33.3% Butyric acid 33.3% Valeric acid | 500 ppm | Control Diet | 68 | 32 | *** | 56 | 44 | NS |
| | 33.3% Lactic acid | 1000 ppm | Control Diet | 71 | 29 | ** | 45 | 55 | NS |
| [1] Statistical significance | | | | | | | | | |

As shown in Table 5, combination of butyric acid, valeric acid, and lactic acid of Composition 16 significantly increased diet consumptions of dogs. Moreover, Composition 16 does advantageously not deteriorate cats' palatability.

Compositions 6 and 7 applied at 1000 ppm in fats decreased dogs' palatability.

**2.3. EXAMPLE 3**

Compositions of Table 6 were evaluated.

*Table 6*

| | Ingredient(s) |
|---|---|
| Composition 1 | Phosphoric acid |
| Composition 14 | 12.5% Butyric acid 87.5% Lactic acid |
| Composition 18 | 12.5% Butyric acid 12.5% Iso-valeric acid 75% Lactic acid |

Antimicrobial efficacy

Antimicrobial efficacy of Composition 14 and Composition 18 was tested when added at 1000 ppm in fat.

As illustrated in Figure 3, both Composition 14 and Composition 18 had inhibited all the strains of *Salmonella* below the counting threshold 1.5 hours after inoculation. However, *Salmonella* were again beyond the counting threshold (1 $\log_{10}$ UFC/g) 4 hours after inoculation for Composition 14.

Palatability

The results of dogs' palatability are presented in Table 7.

*Table 7*

| Food A | | | Food B | DOG | | | CAT | | |
|---|---|---|---|---|---|---|---|---|---|
| | | | | % A | %B | Stat[1] | % A | % B | Stat[1] |
| Diet 18 | 12.5% Butyric acid 12.5% Iso-valeric acid 75% Lactic acid | 1000 ppm | Control Diet | *44* | *56* | NS | 50 | 50 | NS |
| [1] *Statistical significance* | | | | | | | | | |

As shown in Table 7, combination of butyric acid, iso-valeric acid, and lactic acid of Composition 18 does not deteriorate pet's palatability.

### 2.4. EXAMPLE 4

Composition of Table 8 was evaluated.

*Table 8*

| | Ingredient(s) |
|---|---|
| Composition 17 | 33.3% Butyric acid 33.3% Iso-valeric acid 33.3% Lactic acid |

Antimicrobial efficacy

Antimicrobial efficacy of Composition 17 was tested when added at 1000 ppm in fat.
As illustrated in Figure 4, Composition 17 inactivated inoculated bacteria 6 hours after inoculation (at most).

Palatability

The results of dogs' and cats' palatability are presented in Table 9.

*Table 9*

| Food A | | | Food B | DOG | | | CAT | | |
|---|---|---|---|---|---|---|---|---|---|
| | | | | % A | %B | Stat[1] | % A | % B | Stat[1] |
| Diet 17 | 33.3% Butyric acid 33.3% Iso-valeric acid 33.3% Lactic acid | 1000 ppm | Control Diet | 47 | 53 | NS | 45 | 55 | NS |
| [1] *Statistical significance* | | | | | | | | | |

As shown in Table 9, combination of butyric acid, iso-valeric acid and lactic acid in Composition 17 does advantageously not deteriorate dogs' and cats' palatability.

**2.5.EXAMPLE 5**

Compositions of Table 10 were evaluated.

Table 10

|  | Ingredient(s) |
|---|---|
| Composition 9 | 8% Butyric acid 18% Caproic acid 74% Lactic acid |
| Composition 10 | 8% Butyric acid 18% Lauric acid 74% Lactic acid |
| Composition 11 | 8% Caproic acid 18% Acetic acid 74% Lactic acid |
| Composition 12 | 8% Lauric acid 18% Acetic acid 74% Lactic acid |
| Composition 19 | 8% Butyric acid 18% Acetic acid 74% Lactic acid |

Antimicrobial efficacy

Antimicrobial efficacy of Compositions 9, 10, 11, 12, 19 was tested when added at 1000 ppm in fat.

As illustrated in Figure 5, Composition 19 was the first composition to inactivate *Salmonella* inoculum below the counting threshold (5 hours after inoculation). This inhibition was maintained at 71 days after inoculation.

Palatability

The results of dogs' and cats' palatability are presented in Table 11.

Table 11

|  | | | Food B | DOG | | | CAT | | |
|---|---|---|---|---|---|---|---|---|---|
| **Food A** | | | | % A | %B | Stat[1] | % A | % B | Stat[1] |
| Diet 19 | 8% Butyric acid 18% Acetic acid 74% Lactic acid | 1000 ppm | Control Diet | 78 | 22 | *** | 56 | 44 | NS |
| [1] Statistical significance | | | | | | | | | |

As shown in Table 11, combination of butyric acid, acetic acid, and lactic acid in Composition 19 significantly increased diets consumptions of dogs.

Moreover, Composition 19 does advantageously not deteriorate cats' palatability.

**2.6.EXAMPLE 6**

Composition of Table 12 was evaluated.

*Table 12*

|  | Ingredient(s) |
|---|---|
| Composition 13 | 25% Lactic acid<br>25% Valeric acid<br>25% Caprylic acid<br>25% Butyric acid |

Palatability

The results of dogs' palatability are presented in Table 13.

*Table 13*

| Food A | | | Food B | DOG | | |
|---|---|---|---|---|---|---|
|  |  |  |  | % A | %B | Stat[1] |
| Diet 13 | 25% Lactic acid<br>25% Valeric acid<br>25% Caprylic acid<br>25% Butyric acid | 500 ppm | Control Diet | 25 | 75 | *** |

[1] *Statistical significance*

As shown in Table 13, Composition 13, comprising less than 30% lactic acid, significantly decreased diets consumptions of dogs.

**2.7.EXAMPLE 7**

Composition of Table 14 was evaluated.

*Table 14*

|  | Ingredient(s) |
|---|---|
| Composition 20 | 33% Butyric acid<br>33% Acetic acid<br>33% Lactic acid |

Antimicrobial efficacy

Antimicrobial efficacy of Composition 20 was tested on 3 strains of Fungus, when added at 5000 ppm in a palatability enhancer.
The results of $\Delta$Ct are shown in Table 15. It is often recognized that $\Delta$Ct greater than about 6 show efficient antimicrobial compositions.

*Table 15*

|  | *Eurotium amstelodami* ($\Delta$Ct) | *Aspergillus niger* ($\Delta$Ct) | *Penicillium chrysogenum* ($\Delta$Ct) |
|---|---|---|---|
| Composition 20 | 16.13 | 9.69 | 10.71 |

Composition 20 provides good inhibition performance of the 3 strains of microorganisms.

**Claims**

**1.** A method for providing an antimicrobial activity against *Salmonella,* yeasts and/or molds to a pet food product, comprising:

a) providing a pet food product,
b) incorporating into said pet food product less than 1% of an antimicrobial composition consisting of:

(i) at least 30% of lactic acid, and
(ii) at least two carboxylic acids selected from the group consisting of acetic acid, butyric acid, isobutyric acid, valeric acid, and isovaleric acid.

2. The method according to claim 1, wherein the antimicrobial composition comprises less than 80% of lactic acid.

3. The method according to claim 1 or 2, wherein said pet food product is a pet food ingredient, preferably selected from fats, animal meals, vegetable flours, and palatability enhancers.

**Patentansprüche**

1. Verfahren zum Bereitstellen einer antimikrobiellen Aktivität gegen *Salmonella,* Hefen und/oder Schimmel für ein Haustierfutterprodukt, umfassend:

a) Bereitstellen eines Haustierfutterprodukts,
b) Aufnehmen, in das Haustierfutterprodukt, von weniger als 1% einer antimikrobiellen Zusammensetzung, bestehend aus:

(i) mindestens 30% Milchsäure, und
(ii) mindestens zwei Carbonsäuren, die ausgewählt werden aus der Gruppe, die besteht aus Essigsäure, Buttersäure, Isobuttersäure, Valeriansäure und Isovaleriansäure.

2. Verfahren nach Anspruch 1, wobei die antimikrobielle Zusammensetzung weniger als 80% Milchsäure umfasst.

3. Verfahren nach Anspruch 1 oder 2, wobei das Haustierfutterprodukt ein Haustierfutterbestandteil ist, der vorzugsweise ausgewählt wird aus Fetten, Tiermehlen, pflanzlichen Mehlen und Geschmacksverbesserern.

**Revendications**

1. Procédé de fourniture d'une activité antimicrobienne contre *Salmonella,* les levures et/ou les moisissures à un produit alimentaire pour animaux, comprenant

a) la fourniture d'un produit alimentaire pour animaux,
b) l'incorporation dans ledit produit alimentaire pour animaux de moins de 1 % d'une composition antimicrobienne constituée :

(i) d'au moins 30 % d'acide lactique, et
(ii) d'au moins deux acides carboxyliques choisis dans le groupe constitué d'acide acétique, d'acide butyrique, d'acide isobutyrique, d'acide valérique et d'acide isovalérique.

2. Procédé selon la revendication 1, dans lequel la composition antimicrobienne comprend moins de 80 % d'acide lactique.

3. Procédé selon la revendication 1 ou 2, dans lequel ledit produit alimentaire pour animaux est un ingrédient alimentaire pour animaux, de préférence choisi parmi les graisses, les farines animales, les farines végétales et les exhausteurs de goût.

**Figure 1**

**Figure 2**

Figure 3

Figure 4

Figure 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012018913 A